# EUROPÄISCHE PATENTSCHRIFT

(11) **EP 1 423 676 B1**
(45) Veröffentlichungstag und Bekanntmachung des Hinweises auf die Patenterteilung: **03.11.2010**
(21) Anmeldenummer: 02762251.3
(22) Anmeldetag: 23.08.2002
(51) Int. Cl.: G01N 11/14

(54) **VORRICHTUNG ZUR BESTIMMUNG RHEOLOGISCHER EIGENSCHAFTEN**
DEVICE FOR DETERMINING RHEOLOGICAL PROPERTIES
DISPOSITIF DE DETERMINATION DE PROPRIETES RHEOLOGIQUES

(30) Priorität: 24.08.2001 DE 10140711
(43) Veröffentlichungstag der Anmeldung: 02.06.2004
(73) Patentinhaber: Feustel, Manfred, 51109 Köln (DE)
(72) Erfinder: Feustel, Manfred, 51109 Köln (DE)
(74) Vertreter: Scheffler, Jörg
(86) Internationale Anmeldenummer: PCT/DE2002/003119
(87) Internationale Veröffentlichungsnummer: WO 2003/019152

(56) Entgegenhaltungen:
- US-A- 4 435 080
- US-B1- 6 167 752
- SKYTT M-L ET AL: "A NEW RHEOMETER MEASURING INFRARED DICHROISM IN MOLTEN POLYMERS SUBJECTED TO TRANSIENT AND STEADY SHEAR FLOW" POLYMER ENGINEERING & SCIENCE, SOCIETY OF PLASTICS ENGINEERS, US, Bd. 36, Nr. 13, 15. Juli 1996 (1996-07-15), Seiten 1737-1744, XP000637037 ISSN: 0032-3888
- MATSUZAKA K ET AL: "A RHEO-OPTICAL APPARATUS FOR SIMULTANEOUS DETECTION OF RHEOLOGY, SMALL-ANGLE LIGHT SCATTERING, AND OPTICAL MICROSCOPY UNDER TRANSIENT, OSCILLATORY, AND CONTINUOUS SHEAR FLOWS" REVIEW OF SCIENTIFIC INSTRUMENTS, AMERICAN INSTITUTE OF PHYSICS. NEW YORK, US, Bd. 70, Nr. 5, Mai 1999 (1999-05), Seiten 2387-2397, XP000873190 ISSN: 0034-6748

## Beschreibung

Die Erfindung betrifft eine Vorrichtung mit zwei zueinander beabstandeten und relativ zueinander beweglichen Platten, welche einen Zwischenraum zur Aufnahme einer zu untersuchenden Substanz begrenzen, deren rheologische Eigenschaften simultan zu einem mittels der Vorrichtung durchführbaren optischen Infrarot-Spektroskopie-Messverfahren bestimmbar sind, indem die Vorrichtung einen den Zwischenraum nicht verändernden Lichtdurchlass aufweist, welcher durch einen für Infrarot-Licht transmissiven, mit einer dem Zwischenraum zugeneigten Oberfläche der Platte konturbündig abschließenden Abschnitt ausgestattet ist, wobei der Lichtdurchlass einen transmissiven Körper mit einer großen Härte aufweist.

Eine gattungsgemäße Vorrichtung ist beispielsweise durch die US 4 435 080 bekannt. In dem Zwischenraum wird die Substanz simultan einem rheologischen Messverfahren und einem optischen Infrarot-Spektroskopie-Messverfahren nach der Transmissions-Methode zugeführt, bei dem der Lichtstrahl die Substanz senkrecht zu den beiden die Substanz einschließenden Platten durchläuft.

Durch die simultane Durchführung der beiden Messverfahren werden gegenüber der getrennten Durchführung der Messverfahren zwei wesentliche Vorteile erreicht. Einerseits können die beiden Verfahren an derselben Substanzprobe zeitgleich durchgeführt werden, sodass mögliche Fehlereinflüsse durch Inhomogenitäten in der Substanz ausgeschlossen sind. Zudem können mögliche zwischenzeitliche Veränderungen der Substanz bei der Durchführung der beiden Messverfahren vermieden werden. Andererseits können die beiden Messverfahren einer vergleichenden Betrachtung unterzogen werden, um so die erfassten Messdaten einer Überprüfung zu unterziehen. Auf diese Weise werden störende Umgebungseinflüsse erkannt und bleiben daher bei der weiteren Untersuchung unberücksichtigt.

Die beiden Messverfahren stellen dabei nicht lediglich Abwandlungen desselben Messprinzips dar, sondern führen auf unabhängigem Wege zu Erkenntnissen über Eigenschaften der Substanz, deren Aussagen jedoch Rückschlüsse auf die Ergebnisse des jeweils anderen Messverfahrens zulassen.

Als problematisch bei der Durchführung von rheologischen Untersuchungen erweisen sich jedoch die hohen Anforderungen an die Oberflächenbeschaffenheit der Platten. Hierdurch ist es beispielsweise nicht möglich, zusätzlich Sensoren im Zwischenraum der Platten oder auf deren Oberfläche anzuordnen, weil bereits geringste Veränderungen der Oberflächenbeschaffenheit zu einem Fehlereinfluss bei der rheologischen Untersuchung führen.

Zur Untersuchung von Substanzen ist die Anwendung von optischen Spektroskopie-Messverfahren bekannt. Hierzu wird die Substanz entweder in Transmission oder in gerichteter bzw. diffuser Reflexion vermessen. Während für Messverfahren nach dem Reflexionsprinzip jeweils spezifische Voraussetzungen erfüllt sein müssen, bedeuten Transmissionsmessungen, besonders in der Infrarot-Spektroskopie, einen erheblichen Aufwand für die Vorbereitung der Substanz, Beispielsweise müssen hierzu komplizierte Mikrotomschnitte oder Schmelzfilme angefertigt werden.

Weiterhin beschreiben auch Skytt M-L et al. in "A new rheometer measuring infrared dichroism in molten polymers subjected to transient and steady shear flow", Polymer Engineering Science, Society of Plastics Engineers, US, Bd. 36, Nr. 13, 15. Juli 1996, auf den Seiten 1737 bis 1744, sowie auch Matsuzaka K. et al. in "A rheo-optical apparatus for simultaneous detection of rheology, small-angle light scattering, and optical microscopy under transient, oscillatory, and continuous shear flows", Review of Scientific Intstruments, American Institute of Physics, New York, US, Bd. 70, Nr. 5, Mai 1999, auf den Seiten 2387 bis 2397 die zeitgleiche Durchführung verschiedener Messverfahren zur Bestimmung rheologischer Eigenschaften.

Demgegenüber bietet ein Messverfahren nach dem Prinzip der "Abgeschwächten TotalReflexion" (ATR) eine beinahe universelle Möglichkeit zur schnellen und einfachen Analyse einer Velzahl von Substanzen. Das ATR-Verfahren beruht auf der substanzspezifischen Infrarot-Absorption an der Grenzfläche zwischen einem Medium mit hoher Brechzahl und der Substanz mit einer vergleichsweise niedrigen Brechzahl. Hierzu reicht es aus, einen ausreichenden Kontakt zwischen der Substanz mit dem ATR-Element herbeizuführen. Das Prinzip der ATR beruht auf der Einkopplung des Infrarot-Strahls in ein für Infrarot-Licht transparentes Kristallmaterial, dessen Brechungsindex größer ist als der Brechungsindex der Substanz. Auf seinem Weg durch das ATR-Element wird der Infrarot-Strahl einfach oder mehrfach totalreflektiert. An den Stellen, wo der Strahl an der Grenzfläche des ATR-Elementes mit der Substanz in Kontakt kommt, werden substanzspezifische Anteile aus dem Infrarot-Strahl absorbiert. Auf diese Weise entsteht ein der Transmission sehr ähnliches Spektrum. Ermittelt wird dabei das Verhältnis zwischen der Totalreflexion und den abgeschwächten Werten, als Funktion der Transmission über der Wellenlänge der Infrarot-Strahlung. Ein Vorteil gegenüber Transmissions-Messverfahren ist, dass die Schichtdicke der Substanz bei der Durchführung des ATR-Verfahrens ohne Bedeutung ist. Aufgrund der enormen Vorteile in der Substanzvorbereitung hat die ATR-Technik heute die Transmissionsmethoden weitgehend verdrängt.

Durch die US 5 905 196 A ist ein Viskometer bekannt, welches auf dem Prinzip der Emissionsmethode basiert. Bedingt durch die rheologische Beanspruchung der Probe entsteht Reibungswärme, deren Wärmestrahlung berührungslos gemessen wird, ohne dass dabei der Messablauf selbst beeinflusst wird. Hierzu ist ein Fenster vorgesehen. Als eine zwingende Voraussetzung zur Durchführung dieser Methode ist es erforderlich, dass die infrarote Wärmestrahlung beim Durchgang durch das Fenster nicht beeinflusst, also insbesondere nicht abgeschwächt wird, sodass das Fenster hochgradig transparent ausgeführt sein muss.

Weiterhin ist durch die DE 689 19 256 T2 ein Transmissionsmessverfahren bekannt, bei dem der Lichtstrahl die Substanz parallel zu der unteren Platte bzw. dem oberen Kegel durchläuft. Der Transmissionsweg entspricht daher etwa dem Durchmesser der Kegel-Platte-Anordnung. Als nachteilig erweist sich dabei, dass die dort beschriebene Anordnung zu einem vergleichsweise großen Transmissionsweg führt und dadurch die Auswahl des Wellenlängenbereiches des Lichtes erheblich beschränkt.

Ferner ist durch die EP 0 750 186 A3 eine Vorrichtung bekannt, bei der zwischen zwei Platten die rheologischen Kenngrößen einer Substanz bestimmt werden. Hierzu wird die untere der im Wesentlichen parallel zueinander angeordneten Platten angetrieben und in eine Rotation versetzt. Dadurch wird die Substanz unter Spannung, insbesondere Scherspannung, gesetzt, wobei durch einen Sensor ein Signal an eine Steuereinheit weitergegeben wird. Zeitgleich wird Wärme in die Substanz eingeleitet und es werden dadurch mittels eines weiteren Sensors zusätzlich thermische Kenngrößen ermittelt.

Der Erfindung liegt die Aufgabe zugrunde, eine Vorrichtung zu schaffen, durch die neben rheologischen Eigenschaften mittels eines weiteren Messverfahrens zusätzliche Eigenschaften der Substanz mittels des Messverfahrens nach dem Prinzip der "Abgeschwächten TotalReflexion" (ATR) ohne Rückwirkungen auf die rheologischen Messergebnisse bestimmt werden können.

Diese Aufgabe wird erfindungsgemäß mit einer Vorrichtung gemäß den Merkmalen des Patentanspruchs 1 gelöst. Die Unteransprüche betreffen besonders zweckmäßige Weiterbildungen der Erfindung.

Erfindungsgemäß ist also eine Vorrichtung vorgesehen, bei welcher der transmissive Körper an einem dem Zwischenraum abgewandten Abschnitt eine Lichteinkoppelfläche aufweist, die gegenüber der Plattenebene entsprechend dem gewünschten Lichteintrittswinkel geneigt angeordnet ist. Dabei wird die Bestimmung der rheologischen Eigenschaften simultan mit der Infrarot-Spektroskopie durchgeführt, ohne dass hierbei eine Wechselwirkung zwischen den beiden Messverfahren auftreten kann. Insbesondere wird dabei ein unmittelbarer Kontakt der Substanz mit einem Sensor vermieden, sodass Rückwirkungen auf die Oberfläche der Platten ausgeschlossen sind. Hierdurch treten an der Lichteinkoppelfläche lediglich geringe Verluste durch Retroreflexion auf. Die Messgenauigkeit kann dadurch weiter verbessert werden. Die Vorrichtung eignet sich dadurch zur Durchführung des ATR-Messverfahrens, sodass insbesondere der Aufwand zur Vorbereitung der Substanz wesentlich verringert ist und das Messverfahren mit lediglich geringem Aufwand durchführbar ist. Die Vorrichtung eignet sich dadurch zur Untersuchung geringster Schichtdicken der Substanz, wobei die äußeren Abmessungen der Substanz ohne Einfluss auf die Messung sind.

Dabei wird das für die Durchführung der Infrarot-Spektroskopie erforderliche Infrarot-Licht durch die Platte hindurch der Substanz zugeführt, sodass der Zwischenraum insbesondere allseitig verschließbar ausgeführt ist. Zugleich kann der Lichtdurchlass gezielt in solchen Positionen angeordnet werden, die zur Durchführung der rheologischen Untersuchung unter Spannung gesetzt werden und damit zur Überprüfung durch das Spektroskopie-Messverfahren von besonderer Bedeutung und Aussagekraft sind. Durch den kontur- bzw. flächenbündigen Abschnitt sind Rückwirkungen des Abschnitts auf die rheologischen Messwerte ausgeschlossen.

Aufgrund der großen Härte des transmissiven Körpers führt auch eine Dauerbeanspruchung an einer der Substanz zugeneigten Oberfläche des transmissiven Körpers nicht zu einer Beeinträchtigung der rheologischen Messwerte. Hierdurch kann die Vorrichtung weitgehend verschleißfrei betrieben werden, wobei zudem die Genauigkeit und die Vergleichbarkeit der so gewonnenen Messergebnisse wesentlich verbessert werden können. Als geeignet haben sich in der Praxis beispielsweise Diamant, ZnSe oder Germanium erwiesen. Der Körper weist dabei insbesondere einen gegenüber der zu untersuchenden Substanz höheren Brechungsindex auf.

Eine andere besonders praxisnahe Ausgestaltung der Erfindung wird dann erreicht, wenn die Vorrichtung zusätzlich zu dem ersten Lichtdurchlass mit einem zweiten Lichtdurchlass an derselben Platte ausgestattet ist. Hierbei wird der Infrarot-Lichtstrahl der Substanz durch den ersten Lichtdurchlass zugeführt und tritt anschließend durch den zweiten Lichtdurchlass aus, sodass dieser von einem äußeren Sensor erfassbar ist. Der erste und der zweite Lichtdurchlass sind dabei insbesondere an derselben Platte angeordnet und durch einen gemeinsamen oder durch jeweils einen transmissiven Körper konturbündig verschlossen.

Dabei ist es besonders günstig, wenn die zweite Platte eine Reflexionsfläche aufweist, an welcher der durch den Lichtdurchlass in den Zwischenraum eingetretene Infrarot-Lichtstrahl reflektiert wird.

Eine andere, besonders vorteilhafte Abwandlung der vorliegenden Erfindung wird auch dann erreicht, wenn zumindest eine der Platten zur Einstellung einer gewünschten Temperatur heizbar oder kühlbar ist. Hierdurch können unerwünschte thermische Einflüsse auf die Substanz vermieden werden. Insbesondere können die Messergebnisse dadurch einheitlich auf eine vorbestimmte Temperatur bezogen werden.

Eine andere, besonders praxisnahe Ausgestaltung wird auch erreicht, indem eine der Platten zumindest abschnittsweise kegelförmig ausgeführt ist, um hierdurch die Aussagekraft der rheologischen Messergebnisse weiter zu verbessern. Hierzu kann die Platte beispielsweise austauschbar sein oder eine Aufnahme für ein Zusatzelement aufweisen.

Durch eine weitere besonders praxisnahe Ausgestaltung, bei der die Platten einen einstellbaren Abstand voneinander aufweisen, wird erreicht, dass sowohl das Reflexions-Messverfahren als auch das abgeschwächte Totalreflexions-Spektroskopie-Messverfahren durchgeführt werden können. Hierdurch kann das für die jeweilige Substanz optimale Verfahren individuell ausgewählt werden.

Hierbei ist bei einer einfachen Ausführungsform die zweite Platte antreibbar, während die erste Platte unbeweglich angeordnet ist, um so die für die rheologische Untersuchung entscheidende Spannung einbringen zu können.

Hierzu eignet sich eine weitere Ausgestaltung besonders gut, bei welcher der Körper mehrere Reflexionsflächen aufweist. Hierdurch werden mehrere Lichtdurchtrittsflächen des Infrarot-Lichtes in die Substanz erzeugt, wodurch das Messergebnis und die Aussagekraft des ermittelten Spektrums weiter verbessert ist.

Es ist weiterhin besonders Erfolg versprechend, wenn die Vorrichtung eine Steuereinheit zur Erfassung und vergleichenden Bewertung der mittels des rheologischen Messverfahrens und des Spektroskopie-Messverahrens ermittelten Messwerte aufweist. Auf diese Weise können die mittels der unabhängigen Messverfahren erfassten Messwerte in eine Beziehung zueinander gesetzt werden, um so beispielsweise unerwünschte äußere Einwirkungen herausfiltem zu können.

Durch die mittels der Messverfahren gewonnenen Werte können unerwünschte äußere Einflüsse erfasst und von der weiteren Einbeziehung in die Auswertung ausgeschlossen werden. Besonders vorteilhaft ist jedoch auch eine Ausgestaltung, bei der mittels der Steuereinheit auf Basis bekannter Substanzen ein Wert für die Viskosität ableitbar ist. Hierdurch werden durch das Infrarot-Spektroskopie-Verfahren nicht lediglich Piausibilitätskontrollen durchgeführt, sondern durch Interpolation oder Extrapolation bekannter Werte für die jeweilige Substanz auch rheologische Kenngrößen bestimmt, sodass hierdurch eine unmittelbare Kontrolle der verschiedenen Messwerte möglich ist.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung in
- Fig.1: eine erfindungsgemäße Vorrichtung mit einem Lichtdurchlass zur Durchführung eines Infrarot-Spektroskopie-Messverfahrens, nach dem Prinzip der abgeschwächten Total- reflexion;
- Fig.2: eine weitere Vorrichtung zur Durchführung eines Messverfahrens mit einer Reflexion;
- Fig.3: eine gegenüber Figur 2 abgewandelte Vorrichtung mit einem zusätzlichen Spiegel.

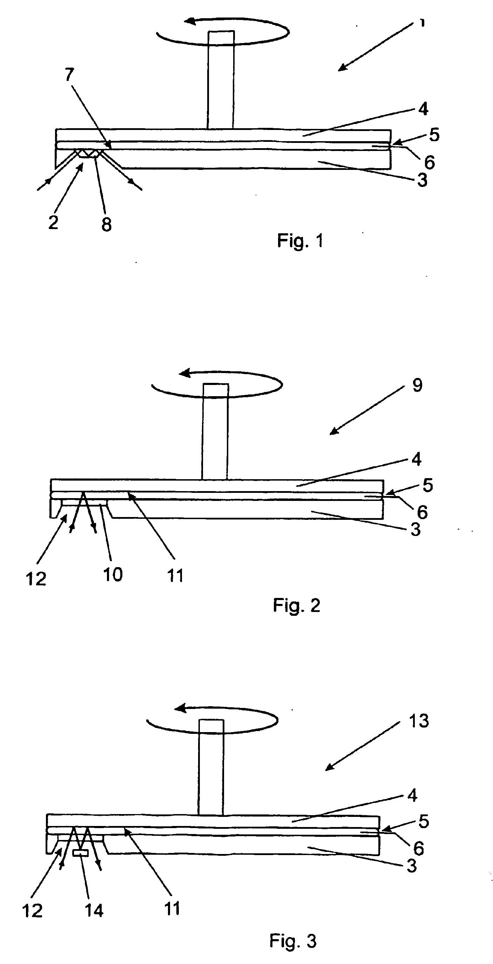

Figur 1 zeigt eine erfindungsgemäße Vorrichtung 1 mit einem Lichtdurchlass 2 für Infrarot-Licht, welches zur Durchführung eines Infrarot-Spektroskopie-Messverfahrens nach dem Prinzip der abgeschwächten Totalreflexion eingesetzt wird. Der Lichtdurchlass 2 ist dabei an einer ersten Platte 3 angeordnet, die gemeinsam mit einer zu der ersten Platte 3 drehbeweglichen zweiten Platte 4 einen Zwischenraum 5 einschließt. Dieser Zwischenraum 5 dient der Aufnahme einer zu untersuchenden Substanz 6, die hierzu durch die Platten 3, 4 unter Spannung gesetzt wird. Die hierbei ermittelten rheologischen Eigenschaften und die Ergebnisse des Infrarot-Spektroskopie-Messverfahrens werden anschließend insbesondere zum Zweck einer vergleichenden Betrachtung unterzogen. Um bei dieser zeitgleich durchzuführenden Untersuchung eine unerwünschte gegenseitige Beeinflussung zu vermeiden, ist der Lichtdurchlass 2 durch einen konturbündig mit einer Oberfläche 7 der Platte 3 abschließenden transmissiven Körper 8, beispielsweise einem Diamanten, verschlossen, so dass die Vorrichtung 1 dauerhaft nahezu verschleißfrei einsetzbar ist. Je nach Größe des Körpers 8 können eine oder mehrere interne Reflexionen an den Grenzflächen zwischen dem Körper 8 und der Substanz 6 stattfinden.

Bei einer in Figur 2 gezeigten Vorrichtung 9 ist die erste Platte 3 mit einem Körper 10 verschlossen, durch den das Infrarot-Licht zur Durchführung des Reflexions-Spektroskopie Verfahrens mit einem steileren Winkel in den Zwischenraum 5 gelangt. Die gewünschte Reflexion des Infrarot-Lichtes erfolgt daher nach der Durchdringung der Substanz 6 an einer Reflexionsfläche 11 der zweiten Platte 4, an der das Infrarot-Licht in Richtung auf einen Lichtdurchlass 12 reflektiert wird. Das dabei entstehende Reflexionsspektrum wird mittels eines nicht dargestellten Sensors erfasst und zur Ergänzung und vergleichenden Betrachtung der rheologischen Untersuchung einer Steuereinheit zugeführt. Der Lichtdurchlass 12 kann dabei eine beliebige geometrische Form aufweisen.

Eine demgegenüber geringfügig abgewandelte Vorrichtung 13 zeigt Figur 3, bei der das Infrarot-Licht von der Reflexionsfläche 11 der Platte 4 nach dem Durchlaufen der Substanz 6 an einem zusätzlichen Spiegel 14 erneut in Richtung auf die Reflexionsfläche 11 reflektiert wird. Das Infrarot-Licht durchläuft daher die Substanz 6 viermal, bevor es durch den Lichtdurchlass 12 an der Platte 3 aus dem Zwischenraum 5 austritt. Dadurch ergibt sich ein weiteres Transmissionsspektrum, durch das die vorhandenen Messwerte in optimaler Weise ergänzt werden.

## Patentansprüche

1. Vorrichtung (1, 9, 13) mit zwei zueinander beabstandeten und relativ zueinander beweglichen Platten (3, 4), welche einen Zwischenraum (5) zur Aufnahme einer zu untersuchenden Substanz (6) begrenzen, deren rheologische Eigenschaften simultan zu einem mittels der Vorrichtung (1, 9, 13) durchführbaren optischen Infrarot-Spektroskopie-Messverfahren bestimmbar sind, indem die Vorrichtung (1, 9, 13) einen den Zwischenraum (5) nicht verändernden Lichtdurchlass (2) aufweist, welcher durch einen für Infrarot-Licht transmissiven, mit einer dem Zwischenraum (5) zugeneigten Oberfläche (7) der Platte (3) konturbündig abschließenden Abschnitt ausgestattet ist, wobei der Lichtdurchlass (2) einen transmissiven Körper (8, 10) mit einer großen Härte aufweist, **dadurch gekennzeichnet, dass** der transmissive Körper (8, 10) an einem dem Zwischenraum (5) abgewandten Abschnitt eine Lichteinkoppelfläche aufweist, die gegenüber der Plattenebene entsprechend dem gewünschten Lichteintrittswinkel geneigt angeordnet ist.

2. Vorrichtung nach Anspruch 1, **dadurch gekennzeichnet, dass** die Vorrichtung zusätzlich zu dem ersten Lichtdurchlass mit einem zweiten Lichtdurchlass an derselben Platte ausgestattet ist.

3. Vorrichtung (9, 13) nach den Ansprüchen 1 oder 2, **dadurch gekennzeichnet, dass** die zweite Platte (4) eine Reflexionsfläche (11) aufweist, an welcher der durch den Lichtdurchlass (2) in den Zwischenraum (5) eingetretene Infrarot-Lichtstrahl reflektiert wird.

4. Vorrichtung (1, 9, 13) nach zumindest einem der vorhergehenden Ansprüche, **dadurch gekennzeichnet, dass** zumindest eine der Platten (3, 4) zur Einstellung einer gewünschten Temperatur heizbar oder kühlbar ist.

5. Vorrichtung nach zumindest einem der vorhergehenden Ansprüche, **dadurch gekennzeichnet, dass** eine der Platten zumindest abschnittsweise kegelförmig ausgeführt ist.

6. Vorrichtung (1, 9, 13) nach zumindest einem der vorhergehenden Ansprüche, **dadurch gekennzeichnet, dass** die Platten (3, 4) einen einstellbaren Abstand voneinander aufweisen.

7. Vorrichtung (1, 9, 13) nach zumindest einem der vorhergehenden Ansprüche, **dadurch gekennzeichnet, dass** die zweite Platte antreibbar ist.

8. Vorrichtung (1, 9, 13) nach zumindest einem der vorhergehenden Ansprüche, **dadurch gekennzeichnet, dass** der Körper (8, 10) mehrere Reflexionsflächen aufweist.

9. Vorrichtung (1, 9, 13) nach zumindest einem der vorhergehenden Ansprüche, **dadurch gekennzeichnet, dass** die Vorrichtung (1, 9, 13) eine Steuereinheit zur Erfassung und vergleichenden Bewertung der mittels des rheologischen Messverfahrens und des Spektroskopie-Messverfahrens ermittelten Messwerte aufweist.

10. Vorrichtung (1, 9, 13) nach Anspruch 9, **dadurch gekennzeichnet, dass** mittels der Steuereinheit auf Basis bekannter Substanzen ein Wert für die Viskosität ableitbar ist.

## Claims

1. Apparatus (1, 9, 13) with two plates (3, 4) which are spaced apart from one another and can be moved relative to one another and which delimit an intermediate space (5) for holding a substance (6) to be examined, the rheological properties of which substance can be determined, with the apparatus (1, 9, 13) simultaneously being able to carry out an optical infrared spectroscopy measurement method, by the apparatus (1, 9, 13) having a light aperture (2) which does not change the intermediate space (5) and is provided with a section which is transmissive to infrared light and ends flush in terms of the contour with a surface (7) of the plate (3) facing the intermediate space (5), with the light aperture (2) having a transmissive body (8, 10) with a great hardness, **characterized in that** the transmissive body (8, 10) has a light coupling-in surface on a section facing away from the intermediate space (5), which light coupling-in surface is arranged at an angle compared to the plate plane, in accordance with the desired light entry angle.

2. Apparatus according to Claim 1, **characterized in that**, in addition to the first light aperture, the apparatus is provided with a second light aperture on the same plate.

3. Apparatus (9, 13) according to Claim 1 or 2, **characterized in that** the second plate (4) has a reflection surface (11) on which the infrared light beam which entered the intermediate space (5) through the light aperture (2) is reflected.

4. Apparatus (1, 9, 13) according to at least one of the preceding claims, **characterized in that** at least one of the plates (3, 4) can be heated or cooled to set a desired temperature.

5. Apparatus according to at least one of the preceding claims, **characterized in that** one of the plates has a conical design, at least in sections.

6. Apparatus (1, 9, 13) according to at least one of the preceding claims, **characterized in that** the plates (3, 4) have a spacing from one another that can be set.

7. Apparatus (1, 9, 13) according to at least one of the preceding claims, **characterized in that** the second plate can be driven.

8. Apparatus (1, 9, 13) according to at least one of the preceding claims, **characterized in that** the body (8, 10) has a number of reflection surfaces.

9. Apparatus (1, 9, 13) according to at least one of the preceding claims, **characterized in that** the apparatus (1, 9, 13) has a control unit for acquiring and comparatively evaluating the measured values determined using the rheological measurement method and the spectroscopy measurement method.

10. Apparatus (1, 9, 13) according to Claim 9, **characterized in that** the control unit can be used to derive a value for the viscosity on the basis of known substances.

## Revendications

1. Dispositif (1, 9, 13) avec deux plaques espacées l'une de l'autre et mobiles l'une par rapport à l'autre (3, 4), qui limitent un espace intermédiaire (5) pour recevoir une substance (6) à analyser dont ont peut définir les caractéristiques rhéologiques simultanément avec un processus de mesure optique par spectroscopie infrarouge pouvant s'exécuter au moyen du dispositif (1, 9, 13), le dispositif (1, 9, 13) comportant un passage pour la lumière (2) qui ne modifie pas l'espace intermédiaire (5), celui-ci étant pourvu d'une section transmissive pour la lumière infrarouge dont le contour s'encastre parfaitement dans une surface (7) de la plaque (3) orientée vers l'espace intermédiaire (5), le passage pour la lumière (2) présentant un corps transmissif d'une dureté élevée (8, 10), **caractérisé en ce que** le corps transmissif (8, 10) comporte une surface d'injection de la lumière dans une section opposée de l'espace intermédiaire (5), qui est disposée inclinée par rapport plan de la plaque en fonction de l'angle de pénétration souhaité de la lumière.

2. Dispositif selon la revendication 1, **caractérisé en ce que** le dispositif, en plus du premier passage pour la lumière, est pourvu d'un deuxième passage pour la lumière sur la même plaque.

3. Dispositif (9, 13) selon les revendications 1 ou 2, **caractérisé en ce que** la deuxième plaque (4) comporte une surface de réflexion (11) sur laquelle se réfléchit le rayon lumineux infrarouge ayant pénétré dans l'espace intermédiaire (5) à travers le passage pour la lumière (2).

4. Dispositif (1, 9, 13) selon une au moins des revendications précédentes, **caractérisé en ce qu'**une au moins des plaques (3, 4) peut être chauffée ou refroidie pour le réglage d'une température souhaitée.

5. Dispositif selon une au moins des revendications précédentes, **caractérisé en ce qu'**une des plaques est réalisée, au moins par sections, sous forme conique.

6. Dispositif (1, 9, 13) selon une au moins des revendications précédentes, **caractérisé en ce que** les plaques (3, 4) présentent un espace réglable de l'une à l'autre.

7. Dispositif (1, 9, 13) selon une au moins des revendications précédentes, **caractérisé en ce que** la deuxième plaque peut être actionnée.

8. Dispositif (1, 9, 13) selon une au moins des revendications précédentes, **caractérisé en ce que** le corps (8, 10) comporte plusieurs surfaces de réflexion.

9. Dispositif (1, 9, 13) selon une au moins des revendications précédentes, **caractérisé en ce que** le dispositif (1, 9, 13) comporte une unité de commande pour enregistrer et évaluer par comparaison les valeurs de mesure déterminées au moyen du procédé de mesure rhéologique et du procédé de mesure par spectroscopie.

10. Dispositif (1, 9, 13) selon la revendication 9, **caractérisé en ce qu'**il est possible de déduire une valeur de la viscosité au moyen de l'unité de commande en se basant sur des substances connues.
